# EUROPEAN PATENT SPECIFICATION

(11) **EP 0 293 219 B1**
(45) Date of publication and mention of the grant of the patent: **18.10.1995**
(21) Application number: 88304820.9
(22) Date of filing: 27.05.1988
(51) Int. Cl.: H02M 7/515

(54) **Power converter device**
Leistungswandlungseinrichtung
Dispositif de conversion de puissance

(30) Priority: 28.05.1987 JP 129616/87
(43) Date of publication of application: 30.11.1988
(73) Proprietor: KABUSHIKI KAISHA TOSHIBA, Kawasaki-shi, Kanagawa-ken 210 (JP)
(72) Inventor: Seki, Nagataka c/o Patent Division, 1-1 Shibaura 1-chome Minato-ku Tokyo 105 (JP)
(74) Representative: BATCHELLOR, KIRK & CO.

(56) References cited:
- IEEE TRANSACTIONS ON POWER APPARATUS AND SYSTEMS, vol. PAS-98, no. 4, 7th August 1979, pages 1466-1474, IEEE, New York, US; G.A. PHILLIPS et al.:"Progress in self-commutated inverters for fuel cells and batteries"
- PATENT ABSTRACTS OF JAPAN, vol. 9, no. 75 (E-306)[1798], 4th April 1985 & JP-A-59 209 073
- PATENT ABSTRACTS OF JAPAN, vol. 11, no. 127 (E-501)[2574], 21st April 1987 & JP-A-61 273 181

## Description

This invention relates to a power converter device.

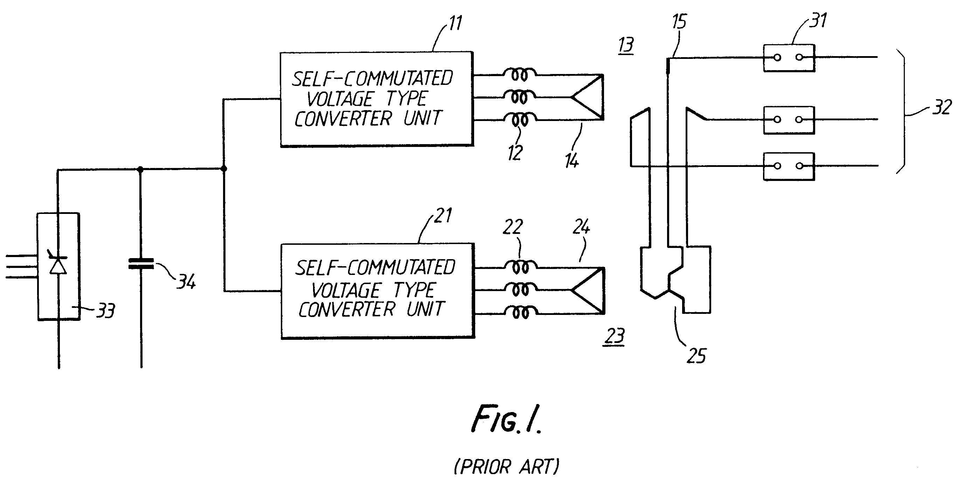

Figure 1 of the accompanying drawings shows a power converter device of a known type for interconnecting alternating current systems. Reference numerals 11 and 21 indicate three-phase self-commutated voltage type inverter units (hereinafter called inverter units). References 12 and 22 are system interconnecting reactors and transformer units 13, 23 have first windings 14, 24, respectively, and second windings 15, 25, respectively. For each inverter the ac part is connected to one winding of a transformer and the corresponding phases of the second winding 15, 25 of the transformers are connected electrically in series. The outputs of the transformer windings 15, 25 are connected to an ac power system 32 through ac switches 31. The dc sides of the inverters 11, 21 have a common dc power source 33. A capacitor 34 is connected to the dc circuit.

The windings 15, 25 of the transformers are, as described above, connected in zig-zag connection. This is a widely used method of connection in order to obtain the advantage that, when inverter units 11, 21 are operated with a mutual phase difference of 30°, no harmonic components other than the (12p±1)-th order harmonics (where p = 1, 2, etc.) are contained in the resultant output of the transformer.

Operation of the power converter device is initiated as follows:- inverters units 11, 21 are started in operation by a signal from a control circuit (not shown); the rise of the output voltage of inverters 11, 21 is made gradual to avoid excitation rush current in the transformer units; ac switches 31 are closed when the amplitude and phase of the resultant voltage of the windings 15, 25 coincide with the amplitude and phase of the voltage system 32. In the event of malfunction or interruption, ac switches 31 are opened simultaneously with cessation of the operation of the inverter units 11, 21. The time between stopping the inverter units and opening of the ac switches 31 is less than 0.1 second to avoid the problem discussed below.

Self-commutated inverters for system interconnection have recently been used in systems such as solar generators or fuel cells. System interconnection based on self-commutated inverters, where the ac system is weak, are of superior stability compared with system interconnection based on externally commutated inverters. The reason for this is that, in the case of externally commutated inverters, commutation of the thyristors depends on the voltage of the dc system, so commutation of the thyristors may be prevented by disturbance of the system voltage, i.e. so-called commutation failure. To deal with this, in the case of a self-commutated inverter, commutation of the thyristor is performed by a commutation circuit within the inverter so disturbance of the system voltage does not immediately result in commutation failure. However, in the aforementioned operation control system, operation of inverter units 11, 21 may be temporarily cut off by generation of ac overcurrent if, for example, there is an instantaneous fluctuation on the ac system. In this event, it is difficult to re-start the operation immediately the voltage is reset. The reason is that ac switches 31 must open whenever ac over-current occurs. This gives rise to the problems that -
(a) once stoppage has occurred, about five seconds is required from re-commencement of operation until synchronous re-making; and
(b) the life of ac switches 31 is adversely affected by frequent switching.

If it is assumed that an operating scheme is chosen according to which closure of ac switches 31 is followed by operation of the inverter, it might be thought that, for the afore-mentioned overcurrent protection, it would be sufficient simply to stop the operation of the inverter, i.e. simply to stop the on-off operation of the gate of GTO. This ought to have the effect of preventing the ac switches from opening, however, it has been found that this results in two problems. One is the dc over-voltage generated in the transient period when the connection of the transformers to the system is closed and the other is the dc over-voltage in the steady state.

Consider first of all the dc over-voltage in the transient period. Since, as shown in Figure 1, windings 15, 25 are connected in series, if at the instant when ac switches 31 are closed, the ac voltage is not applied to the two transformers equally, the result is the appearance of an alternating current of a high peak quite different from a sine wave. The first reason for this is that the initial magnetisation state of the two transformers is not the same. The second reason is that there is high impedance for high frequencies of harmonic order other than (12p±1), (where p = 1, 2, etc.) because of the zig-zag connection, so the harmonic excitation current components needed to induce a sine wave voltage cannot flow, that is, the excitation characteristic of the iron core is not totally linear, but rather non-linear having hysteresis. Since, in order to create sine wave voltage, high frequencies must be contained in the exciting current but, if there is some restriction that prevents these high frequencies from flowing, the induced voltage will not be a sine wave.

In practical experiments, the peak of the voltage induced in windings 14, 24 of the transformer units was about 2.9 times the root means square value of the sine wave. The dc voltage of the capacitor, therefore, is charged up to this value.

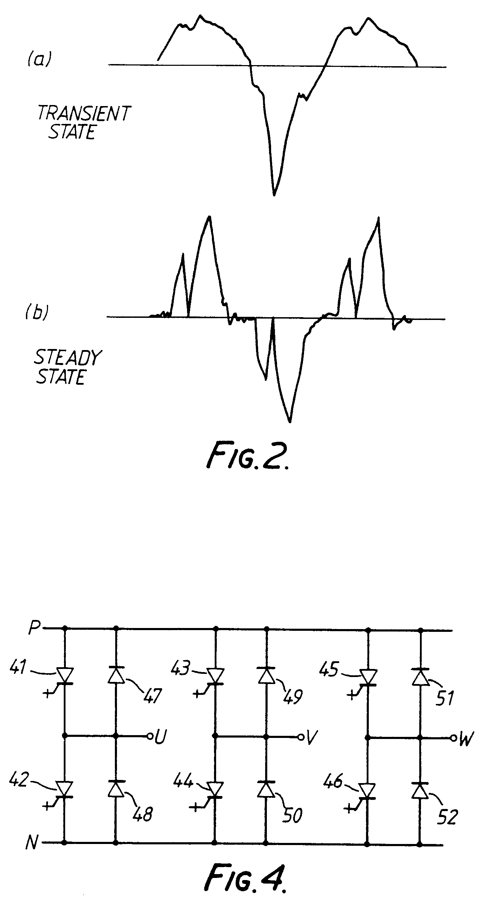

The second problem is the dc over-voltage in the steady state. As described above, the induced voltage is not a simple sine wave but contains harmonic components. Experimentally it has been found that a peak voltage of about 2.4 times the root means square value of the sign wave occurs. The dc voltage of the capacitor is charged up to this value. Figure 2 of the accompanying drawings shows waveforms obtained by experiment as described above.

It is known from an article entitled "Progress in Self-Commutated inverters for fuel cells and batteries" by G.A. Phillips et al and published in IEEE Transactions on Power apparatus and systems Vol. PAS-98 No. 4, 7th August 1979, pages 1466-1474 for a fuel cell power plant to feed into three inverter bridges and for the ac output of the inverter bridges to be supplied through an output transformer to an ac power line. A dc preload comprising a resistor in series with a switch is connected electrically across the input to the inverter bridges. The purpose of the preload is to load the fuel cell and pull down its output voltage below the ,maximum operating level for the inverter bridges during start-up.

In Patent Abstracts of Japan Vol. 9 No. 75 [E-306] [1798] 4th April 1985, a starting method for a self excited power converter is disclosed.

In the description with reference to Figure 1 of the accompanying drawings, 11 and 21 are assumed to be inverter units. However, this invention is applicable not merely to conversion from dc to ac but also to reactive power compensated devices or rectifiers whose power factor can be regulated, so hereinafter devices 11, 21 will be referred to by the general expression self-commutated voltage type converters and the system containing these converters will be referred to generally as a power converter device.

According to the present invention, a power converter device comprises a plurality of self-commutating voltage-type converters each having a dc part and an ac part and rectifier means providing a path for current flow from the ac part to the dc part; a common dc circuit to which the dc part of the converters is connected, said dc circuit including a capacitor; a transformer for each converter, the ac part of the converter being connected to one winding of the transformer and the corresponding phases of the second winding of the transformers being connected electrically in series and first ac switch means interconnecting the second windings of the transformers to an ac power circuit; characterised in that the common dc circuit includes a dc over-voltage suppression means comprising a series circuit of a resistor and an interrupter switch means and pre-charging means for charging the capacitor whereby the capacitor is charged by the pre-charging means before starting the converters, the interrupter switch is closed, and after the converters have been started the interrupter switch is opened.

The pre-charging means may comprise a series circuit of a current limiting element and a second ac switch means said series circuit being connected electrically in parallel with the first ac switch means whereby the capacitor is charged by closing the second ac switch means.

Alternatively, the pre-charging means may comprise a parallel circuit of a current limiting element and a second ac switch means, said parallel circuit being connected electrically in series with the first ac switch means whereby the capacitor is charged by closing said first ac switch and opening the second ac switch means.

According to a second aspect of the present invention, a method of operating a power converter device comprises a plurality of self-commutating voltage-type converters, each having a dc part and an ac part; a common dc circuit to which the dc part of all the converters is connected, said dc circuit including a capacitor; a transformer for each converter, the ac part of the converter being connected to one winding of the transformer and the corresponding phases of the second winding of the transformers being connected electrically in series; and first ac switch means interconnecting the second windings of the transformers to an ac power circuit; characterised in that a dc over-voltage suppression means comprising a series circuit of a resistor and an interrupter switch means is provided in the common dc circuit, said series circuit being connected in parallel with the capacitor and, prior to starting the converters, the capacitor in the dc circuit is charged to a pre-determined level, the interrupter switch means is closed, the converters are started and subsequently the interrupter switch means are opened.

In order that the invention may be more readily understood, it will now be described, by way of example only, with reference to the accompanying drawings, in which:-
Figure 1 shows a prior art power converter device;
Figure 2 shows examples of the waveform of dc winding voltage of the transformers shown in Figure 1;
Figure 3 is a circuit diagram of a power converter device, in accordance with the present invention;
Figure 4 is a circuit diagram of a self-commutated voltage type converter;
Figure 5 is a circuit diagram of a power converter in accordance with an alternative embodiment of the invention;
Figure 6 shows an example of a charging circuit;
Figures 7 and 8 are circuit diagrams of alternative forms of dc over-voltage suppression devices;
Figure 9 is a circuit diagram of a power converter in accordance with a still further embodiment of the invention; and
Figure 10 is a circuit diagram of a system to which the present invention may be applied.

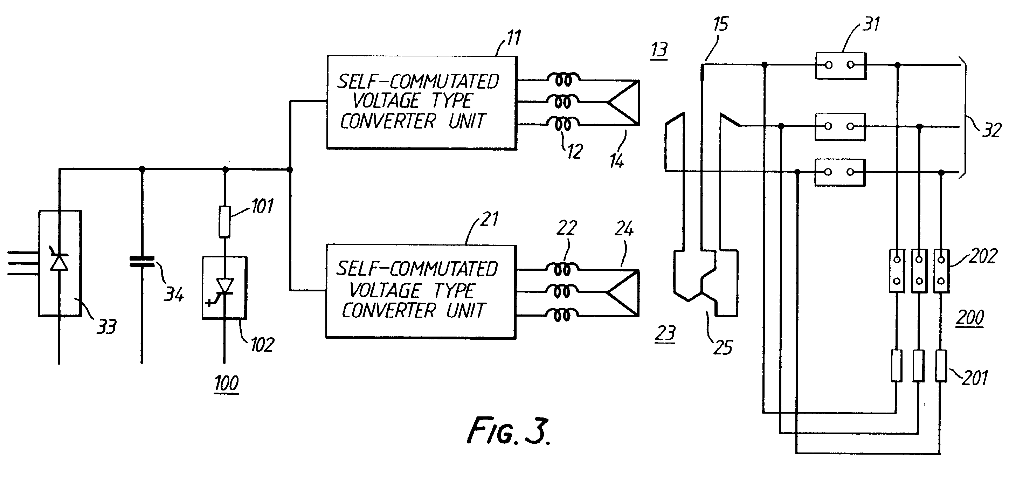

An embodiment of this invention will be described with reference to Figure 3, in which parts which are the same as in Figure 1 are given the same reference numerals.

In Figure 3, 100 represents a dc over-voltage suppression device. This consists of a resistor 101 and circuit breaker device 102. 200 represents a current limiting device, consisting of current limiting elements 201, such as resistors or reactors, and ac switches 202. 11 and 21 represent the self-commutated voltage type converter units.

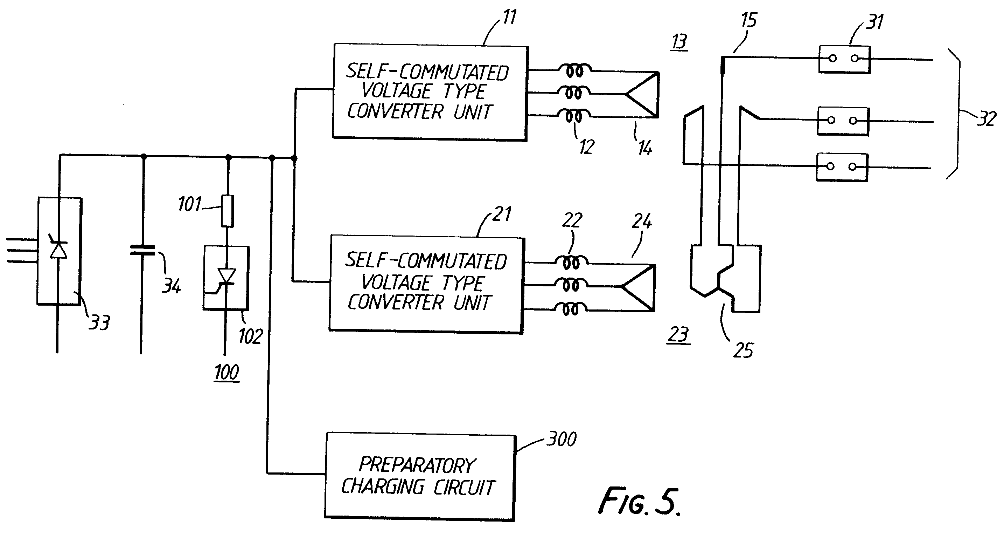

A typical example of self-commutated voltage type converter units 11 and 21 is shown in Figure 4. In this figure, 41 to 46 are GTOs and 47 to 52 are diodes.

Prior to operation of this power converter device, circuit breaker device 102 and ac switch 202 are closed. It should be noted that, normally, the dc circuit gives a preparatory charge to the capacitor 34 up to a prescribed level and ac switches 31 are then closed. However, current limiting device 200 also has the effect of suppressing the charging of capacitor 34, so preparatory charging is not necessarily essential. The rush current of transformer units 13 and 23 is suppressed by current limiting device 200, so that transformer units 13 and 23 are not saturated. Consequently, capacitor 34 is not charged to a value higher than the prescribed value. Charging is performed through diodes 47 to 52 shown in Figure 4.

When the charging current becomes practically zero, the impedance of transformer units 13, 23 seen from the ac side is about the same as the excitation impedance, so the voltage drop of the current limiting element 201 becomes extremely small. Consequently, when ac switches 31 are closed, the transient voltage of transformer units 13, 23 can be neglected. In the subsequent steady state, the current path in respect of high frequency generated in windings 14, 24 is from diodes 47, 49, 51 of the upper arms of self-commutated voltage type converter units 11, 21 to resistor 101 to circuit-breaker device 102 to diodes 48, 50, 52 of the lower arms of self-commutated voltage type converter units 11, 21. As a result, the amount of harmonic voltage is considerably reduced, and the waveform approaches a sine wave voltage. By experiment, it has been found that, for the magnitude of the resistor 101, a value of about one-fifth of the total excitation capacity of transformer units 13, 23 is suitable. If, therefore, we provisionally assume that the excitation capacity is 2%, a resistor of capacity about 0.4% should be inserted in the dc circuit. However, this is a factor lowering the efficiency during operation so, in cases where high efficiency is required, it is desirable to arrange for insertion and removal of a resistor to be linked to the changeover between stopping and operation. In this case, circuit breaker device 102 may appropriately be a semiconductor switching element, such as a GTO.

The capacity of resistor 101 in Figure 3 is preferably low, since a delta connection of transformer dc windings 14, 24 has smaller impedance to the third harmonic and the sixth harmonic, etc. In the case of a Y connection, the capacity of resistor 101 should be about half the transformer excitation capacity.

Figure 5 shows another embodiment of this invention. The difference between this and the embodiment shown in Figure 3 is that a current limiting device 200 to control the rush current of transformer units 13, 23 is not used but, instead, the rush current is suppressed by selecting the magnetic flux density in the rated use state of the transformers to a value less than half of the maximum magnetic flux density of the iron core. However, in this case, a circuit is required that effects preparatory charging of capacitor 34 to the prescribed value. 300 in the figure represents the preparatory charging circuit.

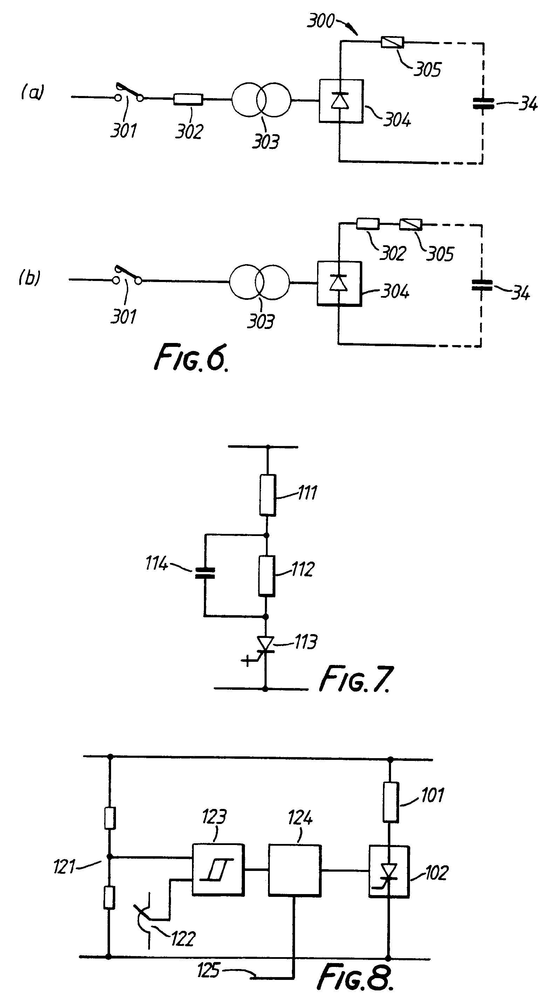

Alternative examples of a preparatory charging circuit 300 is shown in Figure 6. It consists of ac switch 301, resistor 302, transformer 303, rectifier 304 and fuse 305.

When ac switch 301 is closed, capacitor 34 is charged by the path: resistor 302 to transformer 303 to rectifier 304 to fuse 305. The magnitude of the charging current of capacitor 34 is restricted by resistor 302. If the capacitor is pre-charged by preparatory charging circuit 300 in this way, when the ac switches 31 are closed, there is no possibility of very large current flowing in windings of transformer units 13 and 23. Resistor 101 and circuit breaker 102 are useful for over-voltage prevention in the steady state. Circuit breaker device 102 is also closed in linked manner with the closure of ac switches 31. After self-commutated voltage type converter units 11 and 21 operate, circuit breaker device 102 is open-circuited and ac switch 301 can be open-circuited after closure of ac switches 31, provided that, if the dc power source is one that is capable of "soft start", as in the case of a thyristor rectifier, it is possible to give this function to the dc power source without using a preparatory charging circuit.

Figure 7 shows another embodiment of the dc over-voltage suppression device 100 provided in the dc circuit. 111 and 112 are resistors, 113 is a circuit breaker device, and 114 is a capacitor.

When the current limiting element 201 of Figure 1 is constituted by a current limiting reactor, low frequency oscillations are produced by the capacitance of capacitor 34 and the inductance of the current limiting reactor and transformer units 13 and 23. In order to prevent this, it is more effective to use a combination of resistor and capacitor, as shown in Figure 7, than to use a resistor.

The size of the capacitor 114 is about the same as, or larger than, capacitor 34. The resistance of resistor 111 is as small as is permitted by the circuit breaker device 113.

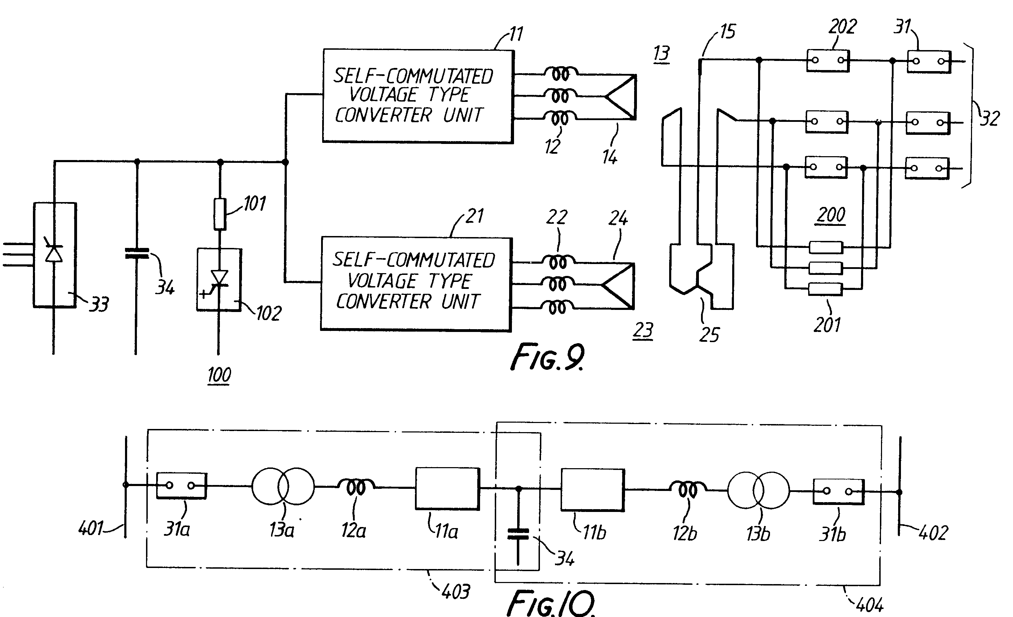

Figure 8 shows another example of a dc over-voltage suppressing device 100. 121 is a voltage detector, 122 is a level setter, 123 is a hysteresis comparator, and 124 is a control device. Hysteresis comparator 123 generates an output of "1" when the detected value of dc voltage exceeds the value of the level setter 122, and closes the circuit breaker device 102 by means of control device 124. If the dc voltage gets below a certain limit, the output of hysteresis comparator 123 becomes "0" and circuit breaker device 102 is open-circuited. 125 is the "1" signal during operation and used to prevent closure of circuit breaker device 102 during operation.

Figure 9 shows a further embodiment of this invention. The only difference between it and Figure 3 is that the current limiting device 200 is inserted in series with ac switches 31. That is, transformer units 13, 23 are excited through current limiting element 201 by closure of ac switches 31, thereby preventing transient voltage. Next, by closing ac switch 202, the system shifts to steady state. Otherwise, the situation is as shown in Figure 1. Examples of delta connection of ac winding 25 of transformer unit 23 to provide a transformer unit connection to remove specific higher harmonics are given in the literature. For example, it can be applied in the same way to a connection as shown on page 172 of "Turnoff Thyristors", compiled by N. Seki, M. Kurada and M. Takeuchi, published by Denki Shoin on 20th April, 1983.

Figures 3 and 9 show two inverter units and two transformer units. However, this invention can be applied to other connections, such as systems for removing high frequencies other than 18p±1 (p = 1, 2, etc.), by using three sets of transformer units with a mutual phase difference of 20°.

Reactors 12 and 22 in Figures 1 and 3 are provided as beteen inverter units 11 and 21 and transformer units 13 and 23. However, this invention could be applied also in the case where they are provided between ac switches 31 and the transformer units. Specifically, although reactors 12 and 22 have a current limiting effect on transformer units 13 and 23, normally they are at the most about 20%, which is too small in relation to the approximately 50% value that is needed to achieve the objective of current limitation.

The dc power source 33 means an irreversible power source, such as a thyristor rectifier, fuel cell, or solar cell, etc. and does not include an accumulator.

However, in a system that performs ac-dc-ac conversion, as in the case of a dc power transmission system, use of a system as shown in Figure 10 may be considered, in which the circuit shown in Figure 1 is employed with two dc parts in common. In the drawing, 401 and 402 are different systems, 403 and 404 are power converter devices described in Figure 3, and these have their dc parts in common. In the dc power transmission system of Figure 3, this invention can be applied when one of the ac switches at both ends is closed.

## Claims

1. A power converter device comprising a plurality of self-commutating voltage-type converters (11,21) each having a dc part and an ac part and rectifier means providing a path for current flow from the ac part to the dc part;
a common dc circuit (33) to which the dc part of the converters is connected, said dc circuit including a capacitor (34);
a transformer (13,23) for each converter, the ac part of the converter being connected to one winding (14,24) of the transformer and the corresponding phases of the second winding (15,25) of the transformers being connected electrically in series and
first ac switch means (31) interconnecting the second windings of the transformers to an ac power circuit;
characterised in that the common dc circuit (33) includes a dc over-voltage suppression means (100) comprising a series circuit of a resistor (101) and an interrupter switch means (102) and pre-charging means (200,300) for charging the capacitor (34) whereby the capacitor is charged by the pre-charging means before starting the converters, the interrupter switch (102) is closed, and after the converters have been started the interrupter switch is opened.

2. A power converter device as claimed in claim 1 characterised in that the pre-charging means comprise a series circuit of a current limiting element (201) and a second ac switch means (202) said series circuit being connected electrically in parallel with the first ac switch means (31) whereby the capacitor (34) is charged by closing the second ac switch means (202).

3. A power converter device as claimed in claim 1 characterised in that the pre-charging means comprise a parallel circuit of a current limiting element 201 and a second ac switch means (202), said parallel circuit being connected electrically in series with the first ac switch means (31) whereby the capacitor (34) is charged by closing said first ac switch 31 and opening the second ac switch means (202).

4. A method of operating a power converter device according to claim 1 comprising;
a plurality of self-commutated voltage-type converters (11,12), each having a dc part and an ac part;
a common dc circuit (33) to which the dc part of all the converters is connected, said dc circuit including a capacitor (34);
a transformer (13,23) for each converter, the ac part of the converter being connected to one winding (14,24) of the transformer and the corresponding phases of the second winding (15,25) of the transformer being connected electrically in series; and
first ac switch means (31) interconnecting the second windings of the transformers to an ac power circuit;
characterised in that dc over-voltage suppression means (100) comprising a series circuit of a resistor (100) and an interrupter switch means (102) is provided, said series circuit being connected in parallel with the capacitor and, prior to starting the converters, the capacitor in the dc circuit is charged to a pre-determined level, the interrupter switch means (102) and the first ac switch means (31) are closed, then the converters are started and subsequently the interrupter switch means (102) is opened.

## Patentansprüche

1. Leistungs-Umrichtervorrichtung, mit einer Anzahl selbstgeführter Spannungs-Umrichter (11, 21), die jeweils einen Gleichspannungs-Abschnitt und einen Wechselspannungs-Abschnitt aufweisen, und mit Gleichrichtereinrichtungen, um einen Strompfad vom Wechselspannungs-Abschnitt zum Gleichspannungs-Abschnitt zu bilden;
einem gemeinsamen Gleichspannungs-Schaltkreis (33), mit dem der Gleichspannungs-Abschnitt der Umrichter verbunden ist, wobei der Gleichspannungs-Schaltkreis einen Kondensator (34) enthält;
einem Transformator (13, 23) für jeden Umrichter, wobei der Wechselspannungs-Abschnitt des Umrichters mit der einen Wicklung (14, 24) des Transformators verbunden und wobei die entsprechenden Phasen der zweiten Wicklung (15, 25) des Transformators elektrisch in Serie geschaltet sind; und
ersten Wechselspannungs-Schaltereinrichtungen (31), die die zweiten Wicklungen des Transformators mit einem Wechselspannungs-Leistungsschaltkreis verbinden;
**dadurch gekennzeichnet**, daß der gemeinsame Gleichspannungs-Schaltkreis (33) eine Einrichtung (100) zum Unterdrücken einer Gleich-Überspannung, die eine Reihenschaltung mit einem Widerstand (101) und einer Unterbrecherschaltereinrichtung (102) umfaßt, und Vorlade-Einrichtungen (200, 300) zum Laden des Kondensators (34) aufweist, wodurch der Kondensator durch die Vorlade-Einrichtungen aufgeladen wird, bevor die Umrichter gestartet werden, wobei der Unterbrecherschalter (102) geschlossen ist, und wobei der Unterbrecherschalter geöffnet ist, nachdem die Umrichter gestartet wurden.

2. Leistungs-Umrichtervorrichtung nach Anspruch 1, **dadurch gekennzeichnet**, daß die Vorlade-Einrichtungen eine Reihenschaltung mit einem Strombegrenzungselement (201) und einer zweiten Wechselspannungs-Schaltereinrichtung (202) haben, wobei die Reihenschaltung elektrisch parallel zur ersten Wechselspannungs-Schaltereinrichtung (31) geschaltet ist, wobei der Kondensator (34) aufgeladen wird, indem die zweite Wechselspannungs-Schaltereinrichtung (202) geschlossen wird.

3. Leistungs-Umrichtervorrichtung nach Anspruch 1, **dadurch gekennzeichnet**, daß die Vorlade-Einrichtungen eine Parallelschaltung mit je einem Strombegrenzungselement (201) und einer zweiten Wechselspannungs-Schaltereinrichtung (202) haben, wobei die Parallelschaltung elektrisch in Reihe mit den ersten Wechselspannungs-Schaltereinrichtungen (31) geschaltet ist, wobei der Kondensator (34) aufgeladen wird, indem die erste Wechselspannungs-Schaltereinrichtung (31) geschlossen und die zweite Wechselspannungs-Schaltereinrichtung (202) geöffnet wird.

4. Verfahren zum Betreiben einer Leistungs-Umrichtervorrichtung nach Anspruch 1, mit:
einer Anzahl selbstgeführter Spannungs-Umrichter (11, 21), die jeweils einen Gleichspannungs-Abschnitt und einen Wechselspannungs-Abschnitt aufweisen;
einem gemeinsamen Gleichspannungs-Schaltkreis (33), mit dem der Gleichspannungs-Abschnitt aller Umrichter verbunden ist, wobei der Gleichspannungs-Schaltkreis einen Kondensator (34) enthält;
einem Transformator (13, 23) für jeden Umrichter, wobei der Wechselspannungs-Abschnitt des Umrichters mit der einen Wicklung (14, 24) des Transformators verbunden und wobei die entsprechenden Phasen der zweiten Wicklung (15, 25) des Transformators elektrisch in Serie geschaltet sind; und
ersten Wechselspannungs-Schaltereinrichtungen (31), die die zweiten Wicklungen des Transformators mit einem Wechselspannungs-Leistungsschaltkreis verbinden;
**dadurch gekennzeichnet**, daß eine Einrichtung (100) zum Unterdrücken einer Gleich-Überspannung, die eine Reihenschaltung mit einem Widerstand (101) und einer Unterbrecherschaltereinrichtung (102) umfaßt, vorgesehen ist, wobei die Reihenschaltung parallel zum Kondensator geschaltet ist und wobei der Kondensator im Gleichspannungs-Schaltkreis auf einen vorbestimmten Wert aufgeladen wird, bevor die Umrichter gestartet werden, wobei die Unterbrecherschaltereinrichtung (102) und die ersten Gleichspannungs-Schaltereinrichtungen (31) geschlossen sind, und wobei danach die Umrichter gestartet und anschließend die Unterbrecherschaltereinrichtung (102) geöffnet wird.

## Revendications

1. Dispositif de conversion de puissance comprenant une pluralité de convertisseurs de tension à autocommutation (11, 21), chacun d'eux ayant un côté courant continu et un côté courant alternatif et un moyen de rectification servant de voie de communication pour le courant entre le côté courant alternatif et le côté courant continu;
un circuit commun (33) auquel le côté courant continu des convertisseurs est branché, ce circuit courant continu comprenant un condensateur (34);
un transformateur (13, 23) pour chaque convertisseur, le côté courant continu du convertisseur étant branché à un enroulement (14, 24) du transformateur et les phases correspondantes de l'enroulement secondaire (15, 25) des transformateurs étant branchées en série; et
un premier moyen à contacteur à courant alternatif (31) qui sert d'interconnexion entre les enroulements secondaires des transformateurs et un circuit d'alimentation alternative;
caractérisé par le fait que le circuit courant continu commun (33) comporte un moyen de suppression de surtension continue (100) comprenant un circuit constitué par une résistance (101) et un moyen d'interruption (102) et un moyen de charge préliminaire (200, 300) pour charger le condensateur (34), dans lequel dispositif le condensateur est chargé par le moyen de charge préliminaire avant de mettre en marche les convertisseurs, le moyen d'interruption (102) se ferme et après que les convertisseurs aient été mis en marche l'interrupteur du moyen d'interruption (102) s'ouvre.

2. Dispositif de conversion de puissance selon la revendication 1, caractérisé par le fait que le moyen de charge préliminaire comprend un circuit dans lequel sont branchés en série un élément de limitation d'intensité (201) et un second moyen à contacteur à courant alternatif (202), ce circuit série étant branché en parallèle sur le premier moyen à contacteur à courant alternatif (31) qui permet de charger le condensateur (34) en fermant le second moyen à contacteur à courant alternatif (202).

3. Dispositif de conversion de puissance selon la revendication 1, caractérisé par le fait que le moyen de charge préliminaire est constitué par un circuit parallèle constitué par un élément de limitation d'intensité 201 et un second moyen à contacteur à courant alternatif (202), ce circuit parallèle étant branché en série avec le premier moyen à contacteur à courant alternatif (31) lequel moyen de charge préliminaire charge le condensateur (34) en fermant le premier contacteur à courant alternatif 31 et en ouvrant le second moyen à contacteur à courant alternatif (202).

4. Méthode de fonctionnement du dispositif de conversion de puissance comprenant:
une pluralité de convertisseurs de tension à autocommutation (11, 21), chacun de ces convertisseurs ayant un côté courant continu et un côté courant alternatif;
un circuit courant continu commun (33) sur lequel se branche le côté courant continu de chaque convertisseur, ce circuit commun courant continu comprenant un condensateur (34);
un transformateur (13, 23) pour chaque convertisseur, le côté courant alternatif du convertisseur étant branché sur un enroulement (14, 24) du transformateur et les phases correspondantes de l'enroulement secondaire (15, 25) du transformateur étant branchées en série; et
le premier moyen à contacteur à courant alternatif (31) servant d'interconnexion entre les enroulements secondaires des transformateurs et le circuit de puissance courant alternatif;
caractérisé par le fait qu'il comporte un moyen de suppression de surtension continue (100) comprenant un circuit dans lequel sont montées en série une résistance (100) et un moyen d'interruption (102), ce circuit étant branché en parallèle sur le condensateur et, avant d'actionner les convertisseurs le condensateur du circuit à courant continu se charge à un niveau déterminé, le moyen d'interruption (102) et le premier moyen à contacteur à courant alternatif (31) se ferment, ensuite les convertisseurs sont mis en marche et ensuite le moyen d'interruption (102) s'ouvre.
